# EUROPÄISCHE PATENTSCHRIFT

(11) **EP 1 309 628 B1**
(45) Veröffentlichungstag und Bekanntmachung des Hinweises auf die Patenterteilung: **24.09.2008**
(21) Anmeldenummer: 01969487.6
(22) Anmeldetag: 24.07.2001
(51) Int. Cl.: C08B 11/20, C08L 1/26, C09J 101/26

(54) **TEILVERNETZTE WASSERLÖSLICHE CELLULOSEETHER, VERFAHREN ZU DEREN HERSTELLUNG UND DEREN VERWENDUNG**
PARTIALLY CROSS-LINKED WATER SOLUBLE CELLULOSE ETHERS, METHOD FOR THE PRODUCTION AND USE THEREOF
ETHERS DE CELLULOSE SOLUBLES DANS L'EAU PARTIELLEMENT RETICULES, LEUR PROCEDE DE PRODUCTION ET LEUR UTILISATION

(30) Priorität: 02.08.2000 DE 10037730
(43) Veröffentlichungstag der Anmeldung: 14.05.2003
(73) Patentinhaber: Henkel AG & Co. KGaA, 40589 Düsseldorf (DE)
(72) Erfinder: HOFFMANN, Heinz-Peter, 40789 Monheim (DE); SCHÖTTMER, Bernard, 40789 Monheim (DE); KÖPNICK, Friedhelm, 40229 Düsseldorf (DE); NEITZER, Klaus, 40595 Düsseldorf (DE); HARTMANN, Reiner, 40880 Ratingen (DE)
(86) Internationale Anmeldenummer: PCT/EP2001/008516
(87) Internationale Veröffentlichungsnummer: WO 2002/010220

(56) Entgegenhaltungen:
- CH-A- 497 468
- DE-A- 2 415 556
- DE-A- 4 200 188
- DE-A- 19 842 637
- US-A- 3 527 751

## Beschreibung

Die vorliegende Erfindung betrifft teilvernetzte wasserlösliche Celluloseether, erhältlich durch
a) Kontaktieren eines wasserlöslichen Cellutoseethers oder eines Gemischs aus zwei oder mehr wasserlöslichen Celluloseethern mit Glyoxal oder Polyglyoxal oder deren Gemisch (Kontaktstufe) und anschließendes
b) Lagern des mit Glyoxal oder Polyglyoxal behandelten wasserlöslichen Celluloseethers oder Gemischs aus zwei oder mehr Celluoseethern für einen Zeitraum von mehr als 12 Stunden bei einer Temperatur von mindestens 60 °C (Lagerstufe),
wasserlösliche Zubereitungen enthaltend solche Celluloseether sowie deren Verwendung.
Wasserlösliche Celluloseether, insbesondere deren pulverförmige Zubereitungen, werden häufig dann zur Herstellung von Klebstoffen eingesetzt, wenn eine Zubereitung eines Klebstoffs am Anwendungsort möglich und insbesondere vom Anwender durchführbar und erwünscht ist. Der Einsatz derartiger Zubereitungen bei der Herstellung von Klebstoffen wird insbesondere dann bevorzugt, wenn die Einsatzart der Klebstoffe die Verwendung von vom Anwender selbst zubereiteten Klebstoffen zuläßt. Die Verwendung derartiger, wasserlöslicher oder wasserdispergierbarer Zubereitungen spart in der Regel Transportkosten, da das Gewicht des Wassers wegfällt. Besonders häufig werden derartige Zubereitungen zum flächigen Beschichten eines Untergrunds mit Papier oder anderen Belägen eingesetzt. Eine besonders häufig anzutreffende Verwendung von wasserlöslichen oder beispielsweise teilweise wasserdispergierbaren Zubereitungen zur Klebstoffherstellung sind Tapetenkleister, die bei der dekorativen Beschichtung von Wänden oder Decken in Innenräumen eingesetzt werden.

Wenn solche Klebstoffe aus wasserlöslichen oder wasserdispergierbaren Zubereitungen vom Anwender selbst hergestellt werden sollen, ist es erforderlich, daß die Zubereitungen eine Reihe von Anforderungen erfüllen die zum einen die Handhabbarkeit der Zubereitung betreffen und zum anderen eine möglichst konstante Produktqualität sowohl im Hinblick auf die Zubereitung selbst als auch auf den aus einer solchen Zubereitung herstellbaren Klebstoff sicherstellen sollen.

Eine besonders häufig an derartige Zubereitungen gestellte Anforderung ist beispielsweise ein gutes Lösungsverhalten der Zubereitung nach dem Einbringen in Wasser. Häufig neigen derartige Zubereitungen nämlich zur Verklumpung beim Einrühren in Wasser, wodurch entweder unakzeptabel hohe Zeiträume zur Beseitigung solcher Klumpen erforderlich sind oder aber die Klumpen sich überhaupt nicht auflösen wodurch bei der Verwendung eines solchen Klebstoffs beispielsweise deutliche qualitative Nachteile resultieren können.

Weiterhin ist eine möglichst schnelle Einsetzbarkeit des mit Hilfe der Zubereitung erhältlichen Klebstoffs gefordert. Hierbei wird insbesondere auf eine möglichst schnelle Löslichkeit oder Dispergierbarkeit verbunden mit einem möglichst schnellen Viskositätsaufbau des Klebstoffs Wert gelegt, wobei trotz eines möglichst schnellen Viskositätsaufbaus noch eine klumpenfreie Auflösung oder Dispersion der Zubereitung erfolgen soll. Häufig wird auch eine möglichst einfache Portionierung einer solchen Zubereitung gefordert, um gegebenenfalls auch Klebstoffmengen zubereiten zu können die nur einen bestimmten Bruchteil eines im Handel befindlichen Packungsvolumens erfordern ohne auf eine möglichst genaue Dosierung und damit auf eine möglichst genaue Einstellung der optimalen Klebstoffeigenschaften verzichten zu müssen.

Verschiedene Ansätze zur Lösung der obengenannten Probleme sind aus dem Stand der Technik bekannt, keiner der bekannten Ansätze ist jedoch dazu in der Lage die angesprochenen Probleme vollständig zu lösen.

So beschreibt beispielsweise die DE-C 2 415 556 ein Verfahren zur Herstellung von wasserlöslichen Pulvern, bei dem feuchte Polysaccharidderivate mit einer wäßrigen Glyoxallösung verknetet werden. Nach der Trocknung und Vermahlung dieser Knetmasse werden Pulver erhalten die jedoch in Bezug auf Klumpenbildung kein völlig befriedigendes Lösungsverhalten zeigen. In der Druckschrift wird darüber hinaus vorgeschlagen, ein trockenes, feinpulvriges Polysaccharidderivat mit Polyglyoxal zu vermischen und die Mischung für 0,5 bis 12 Stunden auf 50 bis 150 °C zu erhitzen. Jedoch sind auch nach diesem Verfahren keine wasserlöslichen Zubereitungen erhältlich, deren Lösungsverhalten völlig befriedigt.

Die DE-A 39 29 400 beschrieben werden Celluloseether-Zusammensetzungen auf der Basis schnellöslicher, pulverförmiger, wasserlöslicher Celluloseether, die zur Vermeidung von Klumpenbildung beim Auflösen quellbare und saugaktive Superabsorber enthalten. Die beschriebenen Celluloseether-Zusammensetzungen können unter Beibehaltung der Schnellöslichkeit in klumpenfrei auflösbare Preßformen überführt werden. Nachteilig wirkt sich bei dem in dieser Druckschrift beschriebenen Verfahren aus, daß der Klebstoff einen Gehalt an Verbindungen aufweist, die nur wenig oder nichts zur Klebkraft beitragen.

Die DE-A 42 00 188 beschreibt eine Klebstoffmischung, die für die Verwendung als Tapetenklebstoff geeignet ist. Die Klebstoffmischung enthält ein Gemisch aus einem wasserlöslichen klebenden Polymeren, beispielsweise einem Cellulosederivat oder Stärke, und einem Produkt, das in Anwesenheit von Wasser unter Freisetzung eines Gases reagiert. Die Klebstoffmischung kann gemäß der Druckschrift auch in Form von Tabletten vorliegen. Problematisch wirkt sich bei den beschriebenen Klebstoffmischungen die Tatsache aus, daß auf strikte Abwesenheit von Feuchtigkeit geachtet werden muß, da sonst die Gasentwicklung bereits einsetzen kann. Dies wirkt sich beispielsweise auf die Lagerstabilität des Produkts und dessen Einsatzfähigkeit unter feuchten Klimabedingungen aus. Darüber hinaus müssen die in der Druckschrift beschriebenen Klebstoffmischungen einen hohen Gehalt an Salzen aufweisen um die zur Verbesserung der Löslichkeit erforderliche Gasmenge zu erzeugen. Ein derartig hoher Salzgehalt führt jedoch zu einer Reduzierung der Viskosität des Klebstoffs, die sich auf die Ergiebigkeit des Klebstoffs auswirkt.

Die DE-A 198 31 856 betrifft Agglomerate zur Herstellung eines wäßrigen Bindemittelsystems. Die Agglomerate enthalten mindestens ein hydrophiles Sprengmittel, das wasserunlöslich ist und einen Quelldruck erzeugt. Als Sprengmittel wird beispielsweise retardierte Cellulose genannt. Problematisch wirkt sich bei den beschriebenen Bindemittelsystemen die Tatsache aus, daß ein pH-Wert von mindestens 8 bei der Zubereitung der Bindemittelsysteme eingehalten werden muß.

Es bestand daher ein Bedarf an wasserlöslichen oder wasserdispergierbaren Zubereitungen, welche die Nachteile des Standes der Technik nicht aufweisen. Insbesondere bestand ein Bedarf nach wasserlöslichen oder wasserdispergierbaren Zubereitungen, welche sich nach dem Eintrag in Wasser schnell und ohne Klumpenbildung auflösen, eine möglichst hohe Endviskosität aufweisen und bereits nach kurzer Zeit, beispielsweise innerhalb von etwa 10 Minuten, mindestens etwa 50% ihrer Endviskosität erreicht haben. Darüber hinaus sollten derartige Zubereitungen, insbesondere dann, wenn sie als Formkörper vorportioniert eingesetzt werden sollen, auch ohne den Einsatz von die Klebkraft vermindernden Sprengmitteln eine optimale Löslichkeit aufweisen.

Es wurde nun gefunden, daß sich derartige Zubereitungen mit den geforderten Eigenschaften erhalten lassen, wenn die Zubereitungen mindestens einen Gehalt an einem unter den nachfolgend beschriebenen Bedingungen behandelten wasserlöslichen Celluoseether enthalten.

Gelöst werden die obengenannten Aufgaben daher durch eine wasserlösliche oder wasserdispergierbare Zubereitung, die mindestens einen wasserlöslichen Celluloseether oder ein Gemisch aus zwei oder mehr Celluloseethern enthält wie sie im Rahmen des nachfolgenden Textes beschrieben werden.

Gegenstand der vorliegenden Erfindung sind daher wasserlösliche Celluloseether, erhältlich durch
a) Kontaktieren eines wasserlöslichen Celluloseethers oder eines Gemischs aus zwei oder mehr wasserlöslichen Celluloseethern mit Glyoxal oder Polyglyoxal oder deren Gemisch (Kontaktstufe) und anschließendes
b) Lagern des mit Glyoxal oder Polyglyoxal behandelten wasserlöslichen Celluloseethers oder Gemischs aus zwei oder mehr Celluoseethern für einen Zeitraum von mehr äls 12 Stunden bei einer Temperatur von mindestens 60 °C (Lagerstufe).

Die Wasserlöslichkeit der im Rahmen der vorliegenden Erfindung zur Herstellung der erfindungsgemäßen eingesetzten Celluloseether beträgt in der Regel wenigstens etwa 0,5 Gewichtsteile pro 100 Gewichtsteile Wasser. Vorzugsweise liegt die Wasserlöslichkeit jedoch bei mindestens etwa 0,5 Gewichtsteilen pro 30 Gewichtsteilen Wasser.

Die erfindungsgemäßen Celluloseether weisen nach einer solchen Behandlung eine verzögerte Wasserlöslichkeit auf. Im Rahmen des vorliegenden Textes bedeutet dies, daß die nach dem beschriebenen Verfahren vorliegenden Celluloseetherderivate sich im Vergleich zu ihrer ursprünglichen, vor Anwendung des beschriebenen Verfahrens vorliegenden Form erst zu einem späteren Zeitpunkt in Wasser lösen. Gegebenenfalls kann dieser spätere Zeitpunkt durch den Verwender der Celluloseether oder der solche Celluloseether enthaltenden Zubereitungen bestimmt werden, indem er eine bestimmte Handlung durchführt, beispielsweise den pH-Wert verändert, vorzugsweise sind die erfindungsgemäßen Celluloseether jedoch ohne weitere Behandlung oder äußere Einflußnahme, insbesondere in einer im wesentlichen pH-neutralen Umgebung, verzögert wasserlöslich.

Unter Celluloseethern werden Cellulosederivate verstanden, die durch partielle oder vollständige Substitution von Wasserstoffatomen der Hydroxygruppen der Cellulose durch Alkyl- und/öder (Ar)alkyl-Gruppen hergestellt werden. Die Alkyl- und/oder (Ar)alkyl-Gruppen tragen vorzugsweise zusätzlich nichtionische, anionische oder kationische Gruppen. Dabei sind die Einzelmoleküle in der Regel unterschiedlich substituiert, so daß ihr Substitutionsgrad ein Mittelwert ist. Außerdem kann die Substitution auch an während der Reaktion entstehenden "neuen" Hydroxylgruppen einsetzen, was z.B. beim Reaktionspartner Epoxid der Fall ist. Die im Rahmen der vorliegenden Erfindung eingesetzten wasserlöslichen Celluloseether tragen jedoch mindestens eine OH-Gruppe.

Die Veretherung der Cellulose wird im allgemeinen durch Einwirkung von (Ar)alkylhalogeniden, beispielsweise Methyl-, Ethyl- und/oder Benzylchlorid, 2-Chlorethyldiethylamin oder Chloressigsäure, und/oder Epoxiden, z.B. Ethylen-, Propylen- und/oder Butylenoxid, Glycidyltrimethylammoniumchlorid, und/oder aktiviertem Olefin, beispielsweise Acrylnitril, Acrylamid oder Vinylsulfonsäure, auf mit Basen, meist mit wäßriger Natronlauge, aktivierter Cellulose durchgeführt. Bevorzugt sind im Rahmen der vorliegenden Erfindung Carboxy-methylcellulose, Methylcellulose, Ethylcellulose, Hydroxyalkylcellulose, insbesondere Hydroxyethylcellulose oder deren Mischether, wie Methylhydroxyethyl- oder - hydroxypropylcellulose, Carboxymethylhydroxyethylcellulose und/oder Ethylhydroxyethylcellulose.

Zur Herstellung der erfindungsgemäßen teilvernetzten wasserlöslichen Celluloseether wird ein wasserlöslicher Celluloseether in einer Kontaktstufe mit Glyoxal und/oder mit Polyglyoxal in Kontakt gebracht.

Unter einer " Kontaktstufe " wird im Rahmen der vorliegenden Erfindung eine Verfahrensstufe verstanden, bei der ein wasserlöslicher Celluloseether oder ein Gemisch aus zwei oder mehr wasserlöslichen Celluloseethern mit Glyoxal oder Polyglyoxal oder deren Gemisch in Kontakt gebracht wird.

Zur Durchführung der Kontaktstufe werden vorzugsweise wäßrige Lösungen von Glyoxal oder Polyglyoxal eingesetzt. Im Rahmen einer bevorzugten Ausführungsformen der Erfindung werden wäßrige Glyoxallösungen eingesetzt, die einen Gehalt von etwa 0,1 bis etwa 60 Gew.-%, beispielsweise etwa 2 bis etwa 50 Gew.-% an Glyoxal aufweisen. Besonders geeignet sind beispielsweise Glyoxallösungen, die einen Glyoxalgehalt von etwa 20 bis etwa 45, insbesondere etwa 30 bis etwa 40 Gew.-% aufweisen.

Werden zur Herstellung der erfindungsgemäßen Celluloseether wäßrige Lösungen von Polyglyoxal eingesetzt, so weisen diese vorzugsweise einen Gehalt an Polyglyoxal von etwa 70 bis etwa 90 Gew.-% auf. Vorzugsweise wird die im Handel erhältliche (Highlink 80, Hersteller: Tromsal), etwa 80 Gew.-%ige Form eingesetzt. Es ist im Rahmen der vorliegenden Erfindung ebenfalls möglich, Glyoxal und Polyglyoxal zusammen, d. h., gleichzeitig oder nacheinander zur Herstellung der erfindungsgemäßen Celluloseether einzusetzen.

Glyoxal und/oder Polyglyoxal werden, bezogen auf den wasserlöslichen Celluloseether, in der Regel in einem Anteil von etwa 0,05 bis etwa 8 Gew.-%, vorzugsweise etwa 0,1 bis etwa 5 Gew.-% und besonders bevorzugt in einem Anteil von etwa 0,5 bis etwa 3 Gew.-% eingesetzt. Im Rahmen einer bevorzugten Ausführungsformen der Erfindung wird Polyglyoxal in einer Menge von > 1 Gew.-%, insbesondere in einer Menge von etwa 1,3 bis etwa 1,9 oder etwa 1,45 bis etwa 1,75 Gew.-%, bezogen auf wasserlöslichen Celluloseether, eingesetzt.

Das beschriebenen Herstellungsverfahren für die erfindungsgemäßen Celluloseether kann im Rahmen der vorliegenden Erfindung beispielsweise nur mit einer einzigen Sorte von wasserlöslichem Celluloseether durchgeführt werden. Es ist im Rahmen der vorliegenden Erfindung jedoch auch vorgesehen, daß Gemische aus zwei oder mehr wasserlöslichen Celluloseethern der beschriebenen Behandlung unterzogen werden.

Der wasserlösliche Celluloseether oder das Gemisch aus zwei oder mehr solcher Celluloseether sollte zur Durchführung der Kontaktstufe bevorzugt in trockener Form vorliegen, d.h. mit einem Wassergehalt von höchsten etwa 15 Gew.-%, vorzugsweise höchstens etwa 10 Gew.-%.

Die zur Behandlung vorgesehenen Celluloseether können dabei beispielsweise Wassergehalte von etwa 5 bis etwa 15 Gew.-%, oder etwa 6 bis etwa 9 Gew.-% aufweisen.

Ebenso möglich ist im Rahmen des erfindungsgemäßen Verfahrens der Einsatz von feuchten, d.h. wasserhaltigen Celluloseethern, wie sie als Rohprodukte aus der Celluloseveretherung erhältlich sind. Die feuchten Celluloseether weisen in der Regel einen Wassergehalt von mehr als etwa 15 Gew.-% bis etwa 70 Gew.-%, vorzugsweise etwa 20 bis etwa 40 Gew.-% auf. Im Rahmen einer bevorzugten Ausführungsform der vorliegenden Erfindung werden solche feuchten Celluloseether jedoch vor der Kontaktstufe einer Trocknung unterzogen.

Die zur Behandlung im Rahmen der Kontaktstufe vorgesehenen Celluloseether können beispielsweise in Pulverform eingesetzt werden. Die Celluloseether können dabei beispielsweise granular oder in Pulverform vorliegen. Werden pulverförmige Celluloseether eingesetzt, so weisen diese beispielsweise zu etwa 60 %, besonders bevorzugt zu etwa 70 % und insbesondere bevorzugt zu etwa 80 % eine Teilchengröße von weniger als etwa 0,4 mm, bevorzugt weniger als etwa 0,3 mm und besonders bevorzugt weniger als etwa 0,2 mm (bestimmt nach DIN 4188) auf. Bevorzugt sind jedoch Celluloseether mit Teilchengrößen von wenigstens 0,1 mm Durchmesser. Werden granulare Celluloseether eingesetzt, so liegen deren Teilchengrößen entsprechend oberhalb der für die pulverförmigen Celluloseether genannten Werte. Eine Obergrenze für die Teilchengröße beim Einsatz granularer Celluloseether liegt bei etwa 3 mm. Die im Rahmen der Kontaktstufe eingesetzten Celluloseether können beispielsweise auch voragglomeriert sein. Die Teilchengrößen derartiger voragglomerierter Celluloseether sind dann beispielsweise etwa 2- bis etwa 30-fach größer als die Teilchengrößen der einzelnen, ein Agglomerat bildenden Teilchen.

Wird der wasserlösliche Celluloseether oder das Gemisch aus zwei oder mehr wasserlöslichen Celluloseethern im feuchten Zustand eingesetzt, so liegt es bevorzugt in Form von Flocken mit einem Durchmesser von zweckmäßigerweise etwa 3 bis 10 mm vor und hat einen pH-Wert von etwa 6 bis etwa 10.

Das Kontaktieren des wasserlöslichen Celluloseether oder des Gemischs aus zwei oder mehr wasserlöslichen Celluloseethern mit Glyoxal oder mit Polyglyoxal oder deren Gemisch im Rahmen der Kontaktstufe kann auf beliebige Weise erfolgen. Wird ein feuchter Celluloseether oder ein Gemisch aus zwei oder mehr feuchten Celluloseethern eingesetzt, so kann eine wäßrige Glyoxallösung beispielsweise durch Aufsprühen, Zutropfen oder jede geeignete andere Zugabeart zum Celluloseether oder zum Gemisch aus zwei oder mehr Celluloseethern erfolgen. Es ist ebenfalls möglich, eine wäßrige Lösung von Glyoxal oder Polyglyoxal oder deren Gemisch und den wasserlöslichen Celluloseether oder das Gemisch aus zwei oder mehr wasserlöslichen Celluloseethern in einer Knetvorrichtung, beispielsweise in einem Extruder, zu vermischen. Auch jede andere Mischvorrichtung ist geeignet, beispielsweise Rotor-Stator Mischvorrichtungen.

Zur Herstellung der erfindungsgemäßen Celluloseether kann die Kontaktstufe bei Umgebungstemperatur, d. h. bei einer Temperatur von etwa 10 bis etwa 30 °C durchgeführt werden. Es ist jedoch ebenfalls möglich, die Kontaktstufe bei einer höheren Temperaturen durchzuführen, beispielsweise bei einer Temperatur von etwa 30 bis etwa 60 °C. Gegebenenfalls kann die Kontaktstufe auch bei noch höheren Temperaturen durchgeführt werden, beispielsweise bei etwa 60 bis etwa 100 °C bzw. dem Siedepunkt der eingesetzten Glyoxal- oder Glyoxallösung, falls eine solche verwendet wird. Die Kontaktstufe kann im Rahmen der vorwiegenden Erfindung beispielsweise bei einer Temperatur durchgeführt werden, die derjenigen Temperatur entspricht bei der die sich an die Kontaktstufe anschließende Lagerstufe durchgeführt wird.

Wird die Kontaktstufe bei einer Temperatur durchgeführt, die unterhalb der anschließend im Rahmen der Lagerstufe vorgesehenen Temperatur liegt, so kann während der Kontaktstufe oder im Anschluß an die Kontaktstufe vor oder während der Lagerstufe einer Erwärmung auf die erforderliche Temperatur durchgeführt werden. Die Erwärmung kann beispielsweise gleichzeitig mit der Kontaktstufe erfolgen (z.B. während eines Verknetens), zweckmäßigerweise erfolgt sie jedoch im Anschluß daran. Die zur Erwärmung notwendige Energie kann dem Gemisch aus Celluloseether oder zwei oder mehr Celluloseethern und Glyoxal und/oder Polyglyoxal in beliebiger Form, beispielsweise durch Mikrowellen oder in konventioneller Weise, d.h. unter Verwendung von konventionellen Heizaggregaten, beispielsweise elektrisch oder mit Wasserdampf beheizbaren Mischvorrichtungen, durchgeführt werden.

Im Anschluß an die hier beschriebene Kontaktstufe wird das Gemisch aus wasserlöslichem Celluloseether oder das Gemisch aus zwei oder mehr wasserlöslichen Celluloseethern und Glyoxal und/oder Polyglyoxal in die Lagerstufe überführt. Im Rahmen der vorliegenden Erfindung kann eine solche Lagerstufe beispielsweise in einem Behälter durchgeführt werden, der bereits zur Durchführung der Kontaktstufe eingesetzt wurde. In diesem Fall ist unter dem Begriff "Überführen" kein tatsächliches, räumliches Überführen zu verstehen.

Es ist im Rahmen der vorliegenden Erfindung jedoch ebenso möglich und sogar bevorzugt, wenn die Lagerstufe in einem anderen Behälter durchgeführt wird als die Kontaktstufe. Dies ergibt sich beispielsweise aus den unterschiedlichen Anforderungen, die an derartige Gefäße gestellt werden. Wird die Erwärmung des Gemischs aus Celluloseether oder zwei oder mehr Celluloseethern und Glyoxal und/oder Polyglyoxal bereits während der Kontaktstufe durchgeführt, so kann es im Rahmen der vorliegenden Erfindung zweckmäßig sein, wenn zur Durchführung der Lagerstufe ein Gefäß eingesetzt wird, das lediglich eine gute thermische Isolierung aufweist, so daß gewährleistet ist, daß das in der Lagerstufe befindliche Gemisch für den vorgesehenen Zeitraum die vorgesehenen Temperatur hält bzw. innerhalb eines vorgesehenen Temperaturkorridors bleibt. Gegebenenfalls kann ein derartiges Gefäß eine Einrichtung aufweisen, die eine Temperaturkonstanz gewährleistet.

Wenn eine Erwärmung des Gemischs aus Celluloseether oder zwei oder mehr Celluloseethern und Glyoxal und/oder Polyglyoxal jedoch erst im Anschluß an die Kontaktstufe erfolgen soll, so kann es zweckmäßig sein, wenn das Gemisch aus Celluloseether oder zwei oder mehr Celluloseethern und Glyoxal und/oder Polyglyoxal zur Durchführung der Lagerstufe in ein Gefäß überführt wird, das eine Erwärmung des Gemischs auf die während der Lagerstufe vorgesehenen Temperatur gewährleistet und diese Temperatur für den vorgesehenen Zeitraum halten kann bzw. gewährleistet, daß das Gemisch innerhalb eines bestimmten Temperaturkorridors bleibt. Derartige Gefäße können beispielsweise die bereits oben zur Erwärmung beschriebenen Vorrichtungen aufweisen.

Im Rahmen einer bevorzugten Ausführungsform der Erfindung werden die im Rahmen der Kontaktstufe behandelten Gemische für einen Zeitraum von mehr als 12, insbesondere mehr als 15 Stunden gelagert. Die Lagerung kann dabei auch für längere Zeiträume andauern, beispielsweise für etwa 18, 20, 22, 25, 30 oder mehr Stunden, oder sogar mehr als 40 oder mehr als 50 Stunden.

Die in der Kontaktstufe behandelten Gemische können während der Lagerstufe einer weiteren Vermischung unterzogen werden, beispielsweise durch Lagerung in einem entsprechenden Mischgerät, beispielsweise einem beheizten Pflugscharmischer oder einer beheizten rotierenden Trommel. In einer bevorzugten Ausführungsform der vorliegenden Erfindung werden die im Rahmen der Kontaktstufe behandelten Gemische während der Lagerstufe jedoch nicht wesentlich oder gar nicht bewegt.

Die Lagerstufe wird vorzugsweise bei eine Temperatur von mindestens etwa 70 °C durchgeführt. Im Rahmen einer weiteren bevorzugten Ausführungsform der vorliegenden Erfindung liegt die Temperatur während der Lagerstufe jedoch höher, beispielsweise bei mindestens etwa 75 oder mindestens etwa 80 °C. Es hat sich gezeigt, das die Lagerstufe auch bald noch höheren Temperaturen, beispielsweise bei 85, 90, 95 oder sogar 100 °C durchgeführt werden kann. Die Obergrenze für die bei der Durchführung der Lagerstufe herrschende Temperatur stellt in der Regel der Siedepunkt des im Gemisch vorliegenden Wasseranteils bzw. der wäßrigen Lösung von Glyoxal und/oder Polyglyoxal dar.

Die so erhältlichen, erfindungsgemäßen Celluloseether können zur Herstellung von wasserlöslichen Zubereitungen eingesetzt werden. Derartige Zubereitungen werden beispielsweise als Schutzkolloide, Verdickungsmittel, Klebstoffe, insbesondere als Tapetenkleister eingesetzt. Die Zubereitungen können die erfindungsgemäßen Celluloseether in einer Menge von bis zu 100 Gew.-% enthalten, d. h., die Celluloseether als solche sind bereits zum Einsatz für die genannten Anwendungen geeignet.

Im Rahmen einer weiteren Ausführungsform der vorliegenden Erfindung können die erfindungsgemäßen Celluloseether jedoch zusammen mit weiteren Verbindungen den wasserlöslichen Zubereitungen eingesetzt werden.

Gegenstand der vorliegenden Erfindung sind daher auch wasserlöslichen Zubereitungen, mindestens enthaltend einen erfindungsgemäßen Celluloseether oder ein Gemisch aus zwei oder mehr erfindungsgemäßen Celluloseethern und mindestens ein weiteres wasserlösliches oder wasserdispergierbares Polymeres.

Im Rahmen der vorliegenden Erfindung umfaßt der Begriff " wasserlöslich " solche Verbindungen, die sich in Wasser molekulardispers oder kolloidal lösen. Im Rahmen einer bevorzugten Ausführungsformen betrifft der Begriff "löslich " solche Verbindungen, die eine Löslichkeit von mehr als mindestens 0,01 g, bezogen auf 100 ml Wasser von 20 °C, aufweisen. Vorzugsweise liegt die Löslichkeit von wasserlöslichen Verbindungen, wie sie im Rahmen des vorliegenden Textes aufgefaßt werden, jedoch oberhalb dieses Wertes, beispielsweise bei 0,1 g oder 0,5 g oder 1 g bezogen auf 100 ml Wasser von 20 °C. Die für die Wasserlöslichkeit genannten Werte müssen nicht sofort nach Einbringen des entsprechenden Stoffs in Wasser erreicht werden. Es kann beispielsweise ausreichend sein, wenn die entsprechenden Werte nach einem Zeitraum von etwa 10 oder etwa 20 Minuten erreicht werden.

Der Begriff "wasserdispergierbar" umfaßt im Rahmen des vorliegenden Textes Verbindungen, die in Wasser keine monokulardisperse oder kolloidale Lösung ergeben sondern sich als disperse Phase im Wasser verteilen.

Im Rahmen einer weiteren Ausführungsform der vorliegenden Erfindung enthalten die erfindungsgemäßen Zubereitungen als weitere wasserlösliche oder wasserdispergierbare Verbindung beispielsweise Stärke und/oder Stärkederivate oder Cellulosederivate, insbesondere Celluloseether.

Wenn als weitere wasserlösliche oder wasserdispergierbare Verbindung Stärke eingesetzt wird, so wird im Rahmen einer bevorzugten Ausführungsform der vorliegenden Erfindung wasserlösliche bzw. wasserquellbare modifizierte Stärke eingesetzt. Geeignet sind beispielsweise partiell abgebaute Stärke oder Quellstärke. Wenn Stärkederivate eingesetzt werden, so eignen sich beispielsweise Stärkeester oder Stärkeether, insbesondere carboxylierte oder die alkoxylierte Stärken. Als carboxylierte oder alkoxylierte Stärken eignen sich sämtliche entsprechend modifizierte natürlichen Stärketypen aus Kartoffeln, Mais, Weizen, Reis, Milo, Tapioka und dergleichen, wobei Stärkederivate auf Basis von Kartoffeln oder Maisstärke bevorzugt sind. Geeignete Stärkederivate weisen beispielsweise einen Carboxylierungsgrad von etwa 0,1 bis etwa 2,0 (DS) oder einen Alkoxylierungsgrad von 0,05 bis 1,5 (MS) auf. Die Stärkederivate können auch vernetzt sein. Als Vernetzungsmittel eignen sich beispielsweise difunktionelle Verbindungen wie sie aus der EP-B 0 311 873 bekannt sind.

Als Celluloseether eignen sich insbesondere folgende Typen: Carboxymethylcellulose (CMC), Carboxymethylmethylcellulose (CMMC), Ethylcellulose (EC), Hydroxyethylcellulose (HBC), Hydroxybutylmethylcellulose (HBMC), Hydroxyethylcellulose (HEC), Hydroxyethylcarboxymethylcellulose (HECMC) Hydroxyethylethylcellulose (HEEC), Hydroxypropylcellulose (HPC), Hydroxypropylcarboxymethylcellulose (HPCMC), Hydroxypropylmethylcellulose (HPMC), Hydroxyethyethylcellulose (HEMC) Methylhydroxyethylcellulose (MHEC), Hydroxyethylmethylcellulose (HEMC) Methylhydroxyethylcellulose (MHEC), Methylcellulose (MC) und Propylcellulose (PC), wobei Carboxymethylcellulose, Methylcellulose, Methylhydroxyethylcellulose oder Methylhydroxypropylcellulose sowie die Alkalisalze der Carboxymethylcellulose sowie gegebenenfalls alkoxylierte, insbesondere ethoxylierte Methylcellulose bevorzugt sind.

Die genannten Celluloseetherderivate können gegebenenfalls zur Verzögerung der Löslichkeit leicht vernetzt, d. h., "retardiert" sein. Wenn im Rahmen der vorliegenden Erfindung jedoch solche Celluloseetherderivate neben den bereits oben erwähnten teilvernetzten, wasserlöslichen Celluloseetherderivaten eingesetzt werden, so sollte der Vernetzungsgrad derartiger Komponenten geringer sein als der Vernetzungsgrad der oben beschriebenen teilvernetzten, wasserlöslichen Celluloseether.

Neben den bereits beschriebenen Verbindungen, d. h., neben dem teilvernetzten, wasserlöslichen Celluloseether oder einem Gemisch aus zwei oder mehr solcher Celluloseether und gegebenenfalls einer wasserlöslichen oder wasserdispergierbaren Verbindung können die erfindungsgemäßen, wasserlöslichen Zubereitungen noch ein Polymerisat enthalten. Derartige Polymerisate können der wasserlöslichen Zubereitung beispielsweise zur Klebkraftverstärkung zugegeben werden. Als Polymerisate eignen sich beispielsweise wasserdispergierbare Polymere wie Vinylpyrrolidon, Polyacrylamid, Polyvinylalkohol oder Ester oder Salze der Polyacrylsäure oder Polymethacrylsäure oder Gemische aus zwei oder mehr der genannten Polymeren. Im Rahmen einer bevorzugten Ausführungsform der Erfindung werden als Polymerisate Polyacrylate oder Polymethacrylate, das heißt, Polymerisate der Ester der Acrylsäure oder Methacrylsäure mit 1 bis etwa 8 C-Atomen in der Alkohol-Komponente sowie Vinylpolymere, insbesondere Polyvinylacetat, eingesetzt.

Weiterhin können als Polymerisate redispergierbare Dispersionspulver von Polymerisationen eingesetzt werden. Hierbei handelt es sich beispielsweise um die Homo- oder Copolymerisate der Vinylester, von Styrol, Acrylsäure- oder Methacrylsäureestern oder von Vinylchlorid. Geeignete Vinylesterpolymerisate sind beispielsweise Vinylacetat-Homopolymere, Copolymere des Vinylacetats mit Ethylen oder Vinylchlorid oder weiteren Vinylestern wie Vinyllaurat, Versaticsäurevinylester, Vinylpivalat oder Ester von Maleinsäure oder Fumarsäure oder Homopolymerisate von Vinylestern von gesättigten C 3- bis C 8-Alkylcarbonsäuren oder deren Copolymerisate mit Ethylen, Vinylchlorid oder weiteren Vinylestern, oder Copolymerisate die ein Gemisch aus zwei oder mehr der genannten Monomeren aufweisen oder Gemische aus zwei oder mehr der genannten Homo- oder Copolymerisate.

Wenn als Polymerisate Verbindungen eingesetzt werden die sich von Acrylsäure oder Methacrylsäure oder Styrol ableiten, so werden vorzugsweise Polymere eingesetzt, die sich aus der Polymerisation von Styrol oder Estern der Acrylsäure oder Methacrylsäure mit linearen oder verzweigten oder cyclischen aliphatischen Alkoholen mit 1 bis 20 C-Atomen erhalten lassen. Ebenfalls geeignet sind Copolymerisate des Styrols, beispielsweise Styrol-Butadien-Copolymere. Ebenfalls geeignet sind Vinylchlorid-Polymerisate, beispielsweise Vinylchlorid-Ethylencopolymere.

Im Rahmen einer bevorzugten Ausführungsform der Erfindung werden als Polymerisate Homopolymere des Vinylacetats, Vinylacetat-Ethylen-Copolymere oder Copolymere von Vinylestern von gesättigten C 3- bis C 8-Alkylcarbonsäuren und Ethylen mit einem Ethylengehalt von 1 bis etwa 40 Gew.-% und 0 bis etwa 40 Gew.-% weiterer Vinylester aus der Gruppe der Vinylester von gesättigten C 3- bis C 8-Alkylcarbonsäuren oder Vinylchlorid, Copolymere von Styrol und Estern der Acrylsäure oder Methacrylsäure wie Styrol-Butylacrylat- oder Styrol-Ethylhexylacrylat-Copolymere mit einem Styrolgehalt von 1 bis etwa 70 Gew.-%. Derartige redispergierbare Polymerisate werden beispielsweise durch Sprühtrocknung von Polymerdispersionen in Sprühtürmen hergestellt. Es ist im Rahmen der vorliegenden Erfindung vorgesehen, daß die oben genannten Polymerisate in den erfindungsgemäßen wasserlöslichen Zubereitungen einzeln oder als Gemische aus zwei oder mehr davon eingesetzt werden.

Die erfindungsgemäßen wasserlöslichen Zubereitungen können gegebenenfalls Zusatzstoffe enthalten, die eine Alkalisierung des durch Auflösen der erfindungsgemäßen wasserlöslichen Zubereitungen herstellbaren Klebstoffs bewirken. Hierzu zählen beispielsweise Ammonium-, Alkali- und/oder Erdalkalimetallhydroxide, die wasserlöslichen, vorzugsweise pulverförmigen Alkalimetallsilikate (Wasserglas), insbesondere Na- oder K-Wasserglas sowie Ammoniak und Amine oder basische Salze und Neutralsalze, die sie von starken und schwachen Säuren ableiten. Hierzu gehören beispielsweise die Alkalisalze der Kohlensäure oder der Carbonsäuren oder der tertiären Phosphate. Die genannten Verbindungen können alleine oder als Gemisch aus zwei oder mehr davon eingesetzt werden. Wenn im Rahmen der Auflösung der erfindungsgemäßen wasserlöslichen Zubereitungen eine Alkalisierung erfolgen soll, dann beträgt der Anteil der obengenannten Zusatzstoffe an der gesamten erfindungsgemäßen wasserlöslichen Zubereitung im allgemeinen etwa 0,1 bis etwa 2 Gew.-%.

Eine Basenzugabe ist jedoch bei den erfindungsgemäßen wasserlöslichen Zubereitungen nicht notwendig, um den Auflösungsvorgang auszulösen oder um die Retardierungszeit zu steuern. Im Rahmen einer bevorzugten Ausführungsform der vorliegenden Erfindung ist die erfindungsgemäße wasserlösliche Zubereitung daher alkalifrei.

Unter "alkalifrei" wird im Rahmen der vorliegenden Erfindung ein Polysaccharid verstanden, das keine den pH-Wert des zur Auflösung des Polysaccharids eingesetzten Wassers zu höheren Werten hin verändernde Zusätze enthält. In der Regel ist davon auszugehen, daß ein erfindungsgemäßes alkalifreies Polysaccharid den pH-Wert des zur Auflösung verwendeten Wassers nicht oder nicht wesentlich verändert. Weiterhin ist üblicherweise davon auszugehen, daß das erfindungsgemäße alkalifreie Polysaccharid sich innerhalb der beanspruchten Aufschlußzeit in Wasser mit einem pH-Wert von nicht mehr als 8, insbesondere nicht mehr als 7,7, 7,5, oder darunter, insbesondere weniger als 7,3, auflöst. Vorzugsweise löst sich das alkalifreie Polysacchäridderivat innerhalb der beanspruchten Aufschlußzeit in Wasser mit einem im wesentlichen neutralen pH-Wert, d.h. einem pH-Wert von etwa 7, beispielsweise etwa 6,8, 6,9, 7,1 oder 7,2.

Im Rahmen einer weiteren Ausführungsform der vorliegenden Erfindung enthält die wasserlösliche Zubereitung Füllstoffe. Geeignete Füllstoffe sind beispielsweise Carbonate (insbesondere Calciumcarbonat), Silikate (beispielsweise Talk, Ton, Glimmer), Kieselerde, Sulfate wie Calcium- oder Bariumsulfat, Aluminiumhydroxid sowie Cellulosefasern, Glasfasern oder Glaskugeln. Derartige Füllstoffe können in der erfindungsgemäßen wasserlöslichen Zusammensetzung beispielsweise in einer Menge von bis zu etwa 20, vorzugsweise von etwa 0,1 bis etwa 10 Gew.-%, bezogen auf die gesamte wasserlöslichen Zubereitung, enthalten sein.

Die erfindungsgemäßen wasserlöslichen Zusammensetzungen können als Pulver oder Granulat vorliegen. Im Rahmen einer bevorzugten Ausführungsform der vorliegenden Erfindung liegen die wasserlöslichen Zusammensetzungen jedoch als Formkörper vor.

Entsprechende Formkörper können nahezu jegliche geometrische Formen aufweisen. Beispielsweise ist dies die Kugelform, die Zylinderform oder die Quaderform. Ebenfalls geeignet sind andere dreidimensionale geometrische Formen beispielsweise Tabletten, Stangen, Tafeln oder Kugeln. Ebenfalls im Rahmen der vorliegenden Erfindung geeignet sind Formkörper, die eine von denen oben genannten Grundformen abweichende, unregelmäßige Form aufweisen. Geeignete unregelmäßige Formen können beispielsweise Nachbildungen von natürlichen oder technischen Gegenständen sein, beispielsweise Tierformen, Autoformen, Flugzeugformen oder dergleichen.

Die erfindungsgemäßen Formteile können derart portioniert sein, daß ein einzelnes Formteil die Zubereitung üblicher Klebstoffmengen erlaubt. Im Rahmen einer bevorzugten Ausführungsform der vorliegenden Erfindung weisen die erfindungsgemäßen Formteile ein Gewicht von etwa 1 g bis etwa 500 g auf. Weitere geeignete Gewichte für die erfindungsgemäßen Formteile sind beispielsweise 50 g, 100 g, 200 g, 300 g oder 400 g. Gegebenenfalls können die erfindungsgemäßen Formteilen derart bearbeitet sein, daß für den Anwender der Formteile auf möglichst einfache Weise bestimmte, definierte Bruchteile des Formteils abgetrennt werden können. Derartige Formteile können beispielsweise in ihrer Oberfläche nutartige Vertiefungen aufweisen, die ein einfaches und möglichst genaues Abbrechen eines definierten Anteils des Formteils erlauben.

Die Herstellung der erfindungsgemäßen Formteile läßt sich beispielsweise durch die Anwendungen üblicher Pressen durchführen. Hierzu wird eine erfindungsgemäße, wasserlösliche Zubereitung in pulvriger oder granularer Form in einer Presse eingeführt und mit oder ohne Zusatz eines Brikettierungs-Bindemittels, mechanisch zusammen gepreßt (kompaktiert). Im Rahmen einer bevorzugten Ausführungsform werden zur Herstellung der erfindungsgemäßen Formteile Brikettierungs-Bindemittel eingesetzt, die aufgrund ihrer plastifizierenden Wirkung den bei der Herstellung des Formteils anzuwendenden Druck verringern. Art und Menge eines solchen Brikettierungs-Bindemittels hängt vor allem von der Körnung des Pulvers ab. Geeignete Brikettierungs-Bindemittel sind beispielsweise feste Polyethylenglykole, die in einer Menge von bis zu etwa 10 Gew.-%, vorzugsweise bis zu etwa 5 Gew.-%, bezogen auf die zu verpressende Mischung, zugegeben werden.

Als Preßsysteme werden vor allem Walzenpressen oder Stempelpressen mit geschlossener oder offener Form oder Ringwalzenpressen eingesetzt. Vorzugsweise werden die erfindungsgemäßen Formkörper durch wasserfreie Walzenkompaktierung der pulverförmigen oder granularen wasserlöslichen Zusammensetzungen hergestellt.

Die erfindungsgemäßen, wasserlöslichen Zubereitungen ergeben mit Wasser rasch eine klumpenfreie wäßrige Lösung bzw. Dispersion. Bei einer solchen wäßrigen Lösung bzw. Dispersion handelt es sich vorzugsweise um einen Kleister, also einen Klebstoff in Form eines wäßrigen Quellungsproduktes, der schon bei relativ niedriger Feststoffkonzentration eine hochviskose, nicht fadenziehende Masse bildet. Derartige Kleister eignen sich beispielsweise zum Verkleben von Tapeten und anderen Wand- oder Deckenbelägen. Mit Hilfe der erfindungsgemäßen wäßrigen Zusammensetzung lassen sich jedoch auch andere wäßrige Klebstoffe herstellen.

Die erfindungsgemäßen Klebstoffe eignen sich, gegebenenfalls nach entsprechender Anpassung der Zusammensetzungen, auch zur Herstellung von klumpenfreien Grundierungen für mineralische Untergründe wie Putz, Estrich oder Beton an Wänden, Decken und Böden. Eine derart behandelte Oberfläche kann anschließend beispielsweise mit einer Spachtelmasse oder mit einem Klebstoff beschichtet werden. Darüber hinaus lassen sich die erfindungsgemäßen Zubereitungen grundsätzlich als Schutzkolloid, Verdickungsmittel, Klebstoff oder Zusätze in Spachtelmassen einsetzen.

Gegenstand der Erfindung ist daher auch die Verwendung der erfindungsgemäßen Polysaccharidderivate als Schutzkolloid, Verdickungsmittel, Klebstoff, oder Zusatz in Spachtelmassen.

Die Erfindung wird nachfolgend durch Beispiele näher erläutert:

### Beispiele

Die folgenden Beispiele geben Rezepturen wieder, wie sie als wasserlösliche Zubereitungen gemäß der vorliegenden Erfindung, insbesondere als Formkörper, eingesetzt werden können.

### 1.

| | |
|---|---|
| Erfindungsgemäß behandelte, granulierte Methylhydroxyethylcellulose (Viskosität: Brookfield, 20°C, RVT, 5%, 10000 mPas nach 30 min.) | 50 Gew.-% |
| Polyvinylacetat-Homopolymeres | 35 Gew.-% |
| Kreide | 10 Gew.-% |
| Cellulosefaser | 5 Gew.-% |

### 2.

| | |
|---|---|
| Erfindungsgemäß behandelte, granulierte Methylhydroxyethylcellulose (Viskosität: Brookfield RVT, 20°C, 5%, 10000 mPas, nach 30 min) | 70 Gew.-% |
| Polyvinylacetat-Homopolymeres | 20 Gew.-% |
| Kreide | 7 Gew.-% |
| Cellulosefaser | 3 Gew.-% |

### 3.

| | |
|---|---|
| Erfindungsgemäß behandelte, granulierte Methylhydroxypropylcellulose (Viskosität: Brookfield RVT, 20°C, 5%, 10000 mPas, nach 30 min) | 50 Gew.-% |
| Polyvinylacetat-Homopolymeres | 50 Gew.-% |

### 4.

| | |
|---|---|
| Erfindungsgemäß behandelte, granulierte Methylhydroxyethylcellulose (Viskosität: Brookfield RVT, 20°C, 5%, 10000 mPas, nach 30 min) | 100 Gew.-% |

### 5.

| | |
|---|---|
| Erfindungsgemäß behandelte, granulierte Methylhydroxyethylcellulose (Viskosität: Brookfield RVT, 20°C, 5%, 10000 mPas, nach 30 min) | 5 Gew.-% |
| Aluminiumsilikat | 10 Gew.-% |
| Polyvinylacetat-Homopolymeres | 35 Gew.-% |
| Karion (Polysaccharid) | 5 Gew.-% |
| Methylcellulose | 45 Gew.-% |

### 6.

| | |
|---|---|
| Erfindungsgemäß behandelte, granulierte Methylhydroxyethylcellulose (Viskosität: Brookfield RVT, 20°C, 5%, 10000 mPas, nach 30 min) | 5 Gew.-% |
| Aluminiumsilikat | 10 Gew.-% |
| Polyvinylacetat-Homopolymeres | 30 Gew.-% |
| Karion, (Polysaccharid) | 5 Gew.-% |
| Methylcellulose | 45 Gew.-% |
| Polyvinylalkohol | 5 Gew.-% |

### 7.

| | |
|---|---|
| Erfindungsgemäß behandelte, granulierte Methylhydroxyethylcellulose (Viskosität: Brookfield RVT, 20°C, 5%, 10000 mPas, nach 30 min) | 5 Gew.-% |
| Aluminiumsilikat | 10 Gew.-% |
| Polyvinylacetat-Homopolymeres | 35 Gew.-% |
| Polyvinylpyrrolidon | 5 Gew.-% |
| Methylcellulose | 45 Gew.-% |

### 8.

| | |
|---|---|
| Erfindungsgemäß behandelte, granulierte Methylhydroxyethylcellulose (Viskosität: Brookfield RVT, 20°C, 5%, 10000 mPas, nach 30 min) | 5 Gew.-% |
| Aluminiumsilikat | 10 Gew.-% |
| Polyvinylacetat-Homopolymeres | 35 Gew.-% |
| Polyvinylacetat | 5 Gew.-% |
| Methylcellulose | 45 Gew.-% |

## Patentansprüche

1. Teilvernetzte wasserlösliche Celluloseether, erhältlich durch
a) Kontaktieren eines wasserlöslichen Celluloseethers oder eines Gemischs aus zwei oder mehr wasserlöslichen Celluloseethern mit Glyoxal oder Polyglyoxal oder deren Gemisch (Kontaktstufe) und anschließendes
b) Lagern des mit Glyoxal oder Polyglyoxal behandelten wasserlöslichen Celluloseethers oder Gemischs aus zwei oder mehr Celluoseethern für einen Zeitraum von mehr als 12 Stunden bei einer Temperatur von mindestens 60 °C (Lagerstufe).

2. Celluloseether nach Anspruch 1, **dadurch gekennzeichnet, daß** die Lagerstufe einen Zeitraum von mindestens 15 Stunden umfaßt.

3. Celluloseether nach Anspruch 1 oder 2, **dadurch gekennzeichnet, daß** die Lagerstufe bei einer Temperatur von mindestens 80 °C durchgeführt wird.

4. Celluloseether nach einem der Ansprüche 1 bis 3, **dadurch gekennzeichnet, daß** die Kontaktstufe mit einer wäßrigen Lösung von Glyoxal oder Polyglyoxal durchgeführt wird.

5. Celluloseether nach einem der Ansprüche 1 bis 4, **dadurch gekennzeichnet, daß** die Kontaktstufe mit insgesamt 0,1 bis 5,0 Gew.-% Glyoxal oder Polyglyoxal, bezogen auf den Celluloseether oder das Gemisch aus zwei oder mehr Celluloseethern, durchgeführt wird.

6. Celluloseether nach einem der Ansprüche 1 bis 5, **dadurch gekennzeichnet, daß** sie als Pulver, Granulat oder Formkörper vorliegen.

7. Verfahren zur Herstellung teilvernetzter wasserlöslicher Celluoseether, bei dem ein mindestens ein wasserlöslicher Celluloseether oder ein Gemisch aus zwei oder mehr wasserlöslichen Celluloseethern in einer Kontaktstufe mit Glyoxal oder Polyglyoxal oder deren Gemisch behandelt wird und der so behandelte wasserlösliche Celluloseether oder das so behandelte Gemisch aus zwei oder mehr wasserlöslichen Celluloseethern für einen Zeitraum von mehr als 12 Stunden bei einer Temperatur von mindestens 60 °C gelagert wird.

8. Wasserlösliche oder wasserdispergierbare Zubereitung, mindestens enthaltend einen teilvernetzten wasserlöslichen Celluloseether oder ein Gemisch aus zwei oder mehr teilvernetzten wasserlöslichen Celluloseethern gemäß einem der Ansprüche 1 bis 6 oder einen gemäß Anspruch 7 hergestellten teilvernetzten wasserlöslichen Celluloseether oder ein Gemisch aus zwei oder mehr davon und mindestens ein wasserlösliches oder wasserdispergierbares Polymeres.

9. Zubereitung nach Anspruch 8, **dadurch gekennzeichnet, daß** als wasserlösliches oder wasserdispergierbares Polymeres mindestens ein Cellulosederivat enthalten ist.

10. Zubereitung nach einem der Ansprüche 8 oder 9, **dadurch gekennzeichnet**, das sie den teilvernetzten wasserlöslichen Celluloseether oder das Gemisch aus zwei oder mehr teilvernetzten wasserlöslichen Celluloseethern in einer Menge von 0,1 bis 95 Gew.-% enthält.

11. Zubereitung nach einem der Ansprüche 8 bis 10, **dadurch gekennzeichnet, daß** sie mindestens ein Polymerisat enthält.

12. Zubereitung nach einem der Ansprüche 8 bis 11, **dadurch gekennzeichnet**, das sie als Formkörper ausgebildet ist.

13. Verwendung eines teilvernetzten, wasserlöslichen Celluloseethers oder eines Gemischs aus zwei oder mehr teilvernetzten wasserlöslichen Celluloseethern gemäß einem der Ansprüche 1 bis 6 oder hergestellt gemäß Anspruch 7 bei der Herstellung von Kleistern.

14. Verwendung einer Zubereitung gemäß einem der Ansprüche 9 bis 12 als Kleister.

## Claims

1. Partially crosslinked water-soluble cellulose ethers obtainable by
a) bringing a water-soluble cellulose ether or a mixture of two or more water-soluble cellulose ethers into contact with glyoxal or polyglyoxal or a mixture thereof (contact stage) and subsequently
b) storing the water-soluble cellulose ether or mixture of two or more cellulose ethers treated with glyoxal or polyglyoxal for a period of more than 12 hours at a temperature of at least 60°C (storage stage).

2. Cellulose ethers according to claim 1, **characterised in that** the storage stage has a duration of at least 15 hours.

3. Cellulose ethers according to claim 1 or claim 2, **characterised in that** the storage stage is carried out at a temperature of at least 80°C.

4. Cellulose ethers according to any one of claims 1 to 3, **characterised in that** the contact stage is carried out with an aqueous solution of glyoxal or polyglyoxal.

5. Cellulose ethers according to any one of claims 1 to 4, **characterised in that** the contact stage is carried out with a total of 0.1 to 5.0 wt.% of glyoxal or polyglyoxal, relative to the cellulose ether or the mixture of two or more cellulose ethers.

6. Cellulose ethers according to any one of claims 1 to 5, **characterised in that** they are present as a powder, granules or shaped articles.

7. A method for producing partially crosslinked water-soluble cellulose ethers, in which at least one water-soluble cellulose ether or a mixture of two or more water-soluble cellulose ethers is treated with glyoxal or polyglyoxal or a mixture thereof in a contact stage and the water-soluble cellulose ether treated in this manner or the mixture of two or more water-soluble cellulose ethers treated in this manner is stored for a period of more than 12 hours at a temperature of at least 60°C.

8. A water-soluble or water-dispersible preparation at least containing a partially crosslinked water-soluble cellulose ether or a mixture of two or more partially crosslinked water-soluble cellulose ethers according to any one of claims 1 to 6 or a partially crosslinked water-soluble cellulose ether or a mixture of two or more thereof produced according to claim 7 and at least one water-soluble or water-dispersible polymer.

9. A preparation according to claim 8, **characterised in that** at least one cellulose derivative is present as the water-soluble or water-dispersible polymer.

10. A preparation according to either of claim 8 or claim 9, **characterised in that** it contains the partially crosslinked water-soluble cellulose ether or the mixture of two or more partially crosslinked water-soluble cellulose ethers in a quantity of 0.1 to 95 wt.%.

11. A preparation according to any one of claims 8 to 10, **characterised in that** it contains at least one polymer.

12. A preparation according to any one of claims 8 to 11, **characterised in that** it takes the form of a shaped article.

13. Use of a partially crosslinked, water-soluble cellulose ether or of a mixture of two or more partially crosslinked water-soluble cellulose ethers according to any one of claims 1 to 6 or produced according to claim 7 in the production of pastes.

14. Use of a preparation according to any one of claims 9 to 12 as a paste.

## Revendications

1. Ethers de cellulose solubles dans l'eau, partiellement réticulés, pouvant être obtenus par
a) mise en contact d'un éther de cellulose soluble dans l'eau ou d'un mélange de deux éthers de cellulose solubles dans l'eau ou plus avec du glyoxal ou du polyglyoxal ou leur mélange (étape de contact), puis
b) entreposage de l'éther de cellulose soluble dans l'eau ou du mélange de deux éthers de cellulose ou plus, traité avec du glyoxal ou du polyglyoxal, pendant un laps de temps supérieur à 12 heures à une température d'au moins 60°C (étape d'entreposage).

2. Ethers de cellulose selon la revendication 1, **caractérisés en ce que** l'étape d'entreposage comprend un laps de temps d'au moins 15 heures.

3. Ethers de cellulose selon la revendication 1 ou 2, **caractérisés en ce que** l'étape d'entreposage est réalisée à une température d'au moins 80°C.

4. Ethers de cellulose selon l'une quelconque des revendications 1 à 3, **caractérisés en ce que** l'étape de contact est réalisée avec une solution aqueuse de glyoxal ou de polyglyoxal.

5. Ethers de cellulose selon l'une quelconque des revendications 1 à 4, **caractérisés en ce que** l'étape de contact est réalisée avec au total 0,1 à 5,0% en poids de glyoxal ou de polyglyoxal, par rapport à l'éther de cellulose ou au mélange de deux éthers de cellulose ou plus.

6. Ethers de cellulose selon l'une quelconque des revendications 1 à 5, **caractérisés en ce qu'**ils se trouvent sous forme de poudre, de granulat ou de corps façonné.

7. Procédé pour la préparation d'éthers de cellulose solubles dans l'eau, partiellement réticulés, dans lequel au moins un éther de cellulose soluble dans l'eau ou un mélange de deux éthers de cellulose solubles dans l'eau ou plus est traité, dans une étape de contact, avec du glyoxal ou du polyglyoxal ou leur mélange et l'éther de cellulose soluble dans l'eau ainsi traité ou le mélange de deux éthers de cellulose solubles dans l'eau ou plus ainsi traité est entreposé pendant un laps de temps de plus de 12 heures à une température d'au moins 60°C.

8. Composition soluble ou dispersible dans l'eau contenant au moins un éther de cellulose soluble dans l'eau, partiellement réticulé ou un mélange de deux éthers de cellulose solubles dans l'eau, partiellement réticulés ou plus, selon l'une quelconque des revendications 1 à 6 ou un éther de cellulose soluble dans l'eau, partiellement réticulé ou un mélange de deux de ceux-ci ou plus préparé selon la revendication 7 et au moins un polymère soluble ou dispersible dans l'eau.

9. Composition selon la revendication 8, **caractérisée en ce qu'**au moins un dérivé de cellulose est contenu comme polymère soluble ou dispersible dans l'eau.

10. Composition selon l'une quelconque des revendications 8 ou 9, **caractérisée en ce qu'**elle contient l'éther de cellulose soluble dans l'eau, partiellement réticulé ou le mélange de deux éthers de cellulose solubles dans l'eau, partiellement réticulés ou plus en une quantité de 0,1 à 95% en poids.

11. Composition selon l'une quelconque des revendications 8 à 10, **caractérisée en ce qu'**elle contient au moins un polymère.

12. Composition selon l'une quelconque des revendications 8 à 11, **caractérisée en ce qu'**elle est réalisée sous forme de corps façonné.

13. Utilisation d'un éther de cellulose soluble dans l'eau, partiellement réticulé, ou d'un mélange de deux éthers de cellulose solubles dans l'eau, partiellement réticulés ou plus selon l'une quelconque des revendications 1 à 6 ou préparé selon la revendication 7 lors de la préparation de colles de pâte.

14. Utilisation d'une composition selon l'une quelconque des revendications 9 à 12 comme colle de pâte.
